(19) Europäisches Patentamt
European Patent Office
Office européen des brevets

(11) **EP 4 469 276 B1**

(12) **EUROPEAN PATENT SPECIFICATION**

(45) Date of publication and mention
of the grant of the patent:
**24.12.2025 Bulletin 2025/52**

(21) Application number: **23706263.3**

(22) Date of filing: **25.01.2023**

(51) International Patent Classification (IPC):
**B32B 27/08** (2006.01)      **B32B 27/30** (2006.01)
**B32B 27/32** (2006.01)      **C08J 5/18** (2006.01)
**C08L 23/04** (2006.01)

(52) Cooperative Patent Classification (CPC):
**C08L 23/04; B32B 27/08; B32B 27/30;
B32B 27/32; B32B 27/327;** B32B 2250/03;
B32B 2250/24; B32B 2250/246; B32B 2270/00;
B32B 2272/00; B32B 2307/30; B32B 2307/514;
B32B 2307/581; B32B 2307/582; B32B 2307/5825;
(Cont.)

(86) International application number:
**PCT/US2023/061204**

(87) International publication number:
**WO 2023/147320 (03.08.2023 Gazette 2023/31)**

(54) **MULTILAYER FILMS COMPRISING ETHYLENE-BASED POLYMERS**

MEHRSCHICHTFOLIEN MIT POLYMEREN AUF ETHYLENBASIS

FILMS MULTICOUCHES COMPRENANT DES POLYMÈRES À BASE D'ÉTHYLÈNE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.01.2022 EP 22382072**

(43) Date of publication of application:
**04.12.2024 Bulletin 2024/49**

(73) Proprietor: **Dow Global Technologies LLC
Midland, MI 48674 (US)**

(72) Inventors:
• **GARG, Akanksha**
**Lake Jackson, Texas 77566 (US)**
• **PARKINSON, Shaun**
**43006 Tarragona (ES)**

• **NIETO PALOMO, Jesus**
**43006 Tarragona (ES)**
• **EL MARRASSE ZARIOUI, Salma**
**43006 Tarragona (ES)**
• **TER BORG, Frederik**
**4542 NM Terneuzen (NL)**

(74) Representative: **Boult Wade Tennant LLP
Salisbury Square House
8 Salisbury Square
London EC4Y 8AP (GB)**

(56) References cited:
WO-A1-2009/110887      WO-A1-2020/219378
WO-A1-2021/026139      WO-A1-2022/093488
WO-A1-2022/164518      JP-A- H06 115 027
US-A1- 2021 170 726

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B32B 2307/72; B32B 2307/732; B32B 2439/06;
B32B 2553/00

## Description

### TECHNICAL FIELD

Embodiments of the present disclosure generally relate to multilayer films, and more particularly relate to multilayer films including ethylene-based polymers.

### INTRODUCTION

Multilayer films that incorporate a variety of materials, including polypropylene, polyamide, and polyethylene terephthalate, are widely used in industrial and consumer products. Such films used in industrial and consumer products often require sufficient tear resistance-for example, to avoid the film from breakage during the film wrapping process on a pallet. The combination of layers and materials can allow for good performance of the films, but such multilayer films can be difficult, if not impossible, to recycle together due to the different types of materials that are not recycle-compatible with each other. As demand for sustainable and recyclable materials continues to rise, there remains a need for multilayer films that can be recycled more easily and that exhibit comparable or improved performance properties, such as tear resistance. WO 2021/026139 relates to multilayer films that include at least five layers and methods of producing the same. JPH06115027 relates to laminated stretch shrink film. WO 2020/219378 relates to multilayer stretch hood films with enhanced tear resistance. WO 2009/110887 relates to stretch films made by cast and/or air quenched, blown film processes.

### SUMMARY

Embodiments of the present disclosure meet one or more of the foregoing needs by providing multilayer films that exhibit comparable or desirable tear resistance and include recycle-compatible ethylene-based polymers. The multilayer films can be fully recycle-compatible in polyethylene recycling streams, and the tear resistance performance of the inventive multilayer layer films can be comparable or better than other multilayer films that do not comprise recycle-compatible polymers.

Disclosed herein are multilayer films. In one aspect, the multilayer film comprises a first outer layer, a second outer layer, and a core, the core comprising one or more core layers; wherein the core is positioned between the first outer layer and the second outer layer; wherein the core comprises 100 wt.% ethylene-based polymers, based on the total polymer weight of the core; and wherein a first core layer comprises an ethylene-propylene copolymer comprising 60 to 95 wt.% of ethylene monomer and 5 to 40 wt.% of propylene comonomer, the ethylene-propylene copolymer having the following characteristics: a density in the range of from 0.865 to 0.920 g/cm$^3$, measured in accordance with ASTM D792; a melt index ($I_2$) of at least 0.5 g/10 min, measured in accordance with ASTM D-1238 at 190°C at 2.16 kg; and a molecular weight distribution, Mw/Mn, of from 3.0 to 5.0, measured as described herein.

These and other embodiments are described in more detail in the Detailed Description.

### BRIEF DESCRIPTION OF THE DRAWINGS

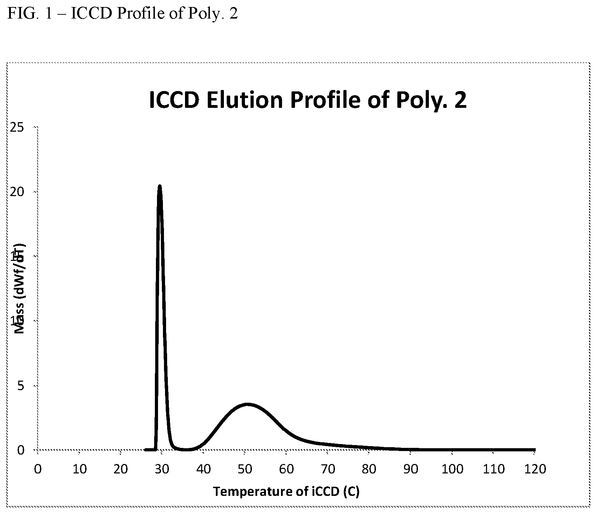

FIG. 1 is an ICCD elution profile of Poly. 2, a commercially available ethylene-propylene copolymer discussed herein below.

### DETAILED DESCRIPTION

Aspects of the disclosed multilayer films are described in more detail below. The multilayer films can have a wide variety of applications, including, for example, cast stretch films, blown films, oriented films, stretch hood films, or the like. This disclosure, however, should not be construed to limit the embodiments set forth below as this disclosure is an illustrative implementation of the embodiments described herein.

As used herein, the term "polymer" means a polymeric compound prepared by polymerizing monomers, whether of the same or a different type. The generic term polymer thus embraces the term homopolymer (employed to refer to polymers prepared from only one type of monomer), and the term copolymer. Trace amounts of impurities (for example, catalyst residues) may be incorporated into and/or within the polymer. A polymer may be a single polymer, a polymer blend, or a polymer mixture, including mixtures of polymers that are formed *in situ* during polymerization.

As used herein, the term "copolymer" means a polymer formed by the polymerization reaction of at least two structurally different monomers. The term "copolymer" is inclusive of terpolymers. For example, ethylene copolymers, such as ethylene-propylene copolymers, include at least two structurally different monomers (e.g., ethylene-propylene copolymer includes copolymerized units of at least ethylene monomer and propylene monomer) and can optionally include additional monomers or functional materials or modifiers, such as acid, acrylate, or anhydride functional groups. Put another way, the copolymers described herein comprise at least two structurally different monomers, and although the copolymers may consist of only two structurally different monomers, they do not necessarily consist of only two structurally different monomers and may include additional monomers or functional materials or modifiers.

As used herein, the terms "polyethylene" or "ethylene-based polymer" shall mean polymers comprising a majority amount (>50 wt.%) of units which have been derived from ethylene monomer. This includes polyethylene homopolymers and copolymers. Unless expressly stated otherwise, the ethylene copolymers disclosed herein (e.g., the ethylene-propylene copolymer described herein) are ethylene-based polymers.

Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m-LLDPE); ethylene-based plastomers (POP) and ethylene-based elastomers (POE); Medium Density Polyethylene (MDPE); and High Density Polyethylene (HDPE). These polyethylene materials are generally known in the art; however, the following descriptions may be helpful in understanding the differences between some of these different polyethylene resins.

The term "LDPE" may also be referred to as "high pressure ethylene polymer" or "highly branched polyethylene" and is defined to mean that the polymer is partly or entirely homo-polymerized or copolymerized in autoclave or tubular reactors at pressures above 100 MPa (14,500 psi) with the use of free-radical initiators, such as peroxides (see for example US 4,599,392). LDPE resins typically have a density in the range of 0.916 to 0.935 g/cm$^3$.

The term "LLDPE", includes both resin made using the traditional Ziegler-Natta catalyst systems and chromium-based catalyst systems as well as single-site catalysts, including, but not limited to, substituted mono- or bis-cyclopentadienyl catalysts (typically referred to as metallocene), constrained geometry catalysts, phosphinimine catalysts & polyvalent aryloxyether catalysts (typically referred to as bisphenyl phenoxy), and includes linear, substantially linear or heterogeneous polyethylene copolymers or homopolymers. LLDPEs contain less long chain branching than LDPEs and include the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). LLDPEs can be made via gas-phase, solution-phase or slurry polymerization or any combination thereof, using any type of reactor or reactor configuration known in the art.

The term "MDPE" refers to polyethylenes having densities from 0.926 to 0.935 g/cm$^3$. "MDPE" is typically made using chromium or Ziegler-Natta catalysts or using single-site catalysts including, but not limited to, substituted mono- or bis-cyclopentadienyl catalysts (typically referred to as metallocene), constrained geometry catalysts, phosphinimine catalysts & polyvalent aryloxyether catalysts (typically referred to as bisphenyl phenoxy), and typically have a molecular weight distribution ("MWD") greater than 2.5.

The term "HDPE" refers to polyethylenes having densities greater than about 0.935 g/cm$^3$ and up to about 0.980 g/cm$^3$, which are generally prepared with Ziegler-Natta catalysts, chrome catalysts or single-site catalysts including, but not limited to, substituted mono- or bis-cyclopentadienyl catalysts (typically referred to as metallocene), constrained geometry catalysts, phosphinimine catalysts & polyvalent aryloxyether catalysts (typically referred to as bisphenyl phenoxy).

The term "ULDPE" refers to polyethylenes having densities of 0.855 to 0.912 g/cm$^3$, which are generally prepared with Ziegler-Natta catalysts, chrome catalysts, or single-site catalysts including, but not limited to, substituted mono- or bis-cyclopentadienyl catalysts (typically referred to as metallocene), constrained geometry catalysts, phosphinimine catalysts & polyvalent aryloxyether catalysts (typically referred to as bisphenyl phenoxy). ULDPEs include, but are not limited to, polyethylene (ethylene-based) plastomers and polyethylene (ethylene-based) elastomers.

As used herein, the term "core layer" refers to a non-skin or non-outer layer of a multilayer film. A core layer is an internal layer, i.e., a layer positioned between two outer layers, of a multilayer film. In one embodiment, a core layer is the non-outer layer of a three-layer film that comprises a first outer layer and a second outer layer. The totality of core layers in the multilayer film of this invention, i.e., one or a plurality, constitute the "core" of the film.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

Disclosed herein are multilayer films. In some embodiments, the multilayer film can be an oriented film that is oriented in the machine and/or cross direction. In some embodiments, the multilayer film is a blown film. In other embodiments, the multilayer film is a cast film. In further embodiments, the multilayer film is a stretch hood film.

The multilayer films according to embodiments disclosed herein comprise a first out layer, a second outer layer, and a core, the core comprising one or more core layers. The core is positioned between the first out layer and the second outer layer. The core comprises a first core layer that comprises an ethylene-propylene copolymer.

First Outer Layer and Second Outer Layer of Multilayer Film

The first outer layer and the second outer layer of the multilayer film are not particularly limited. The first outer layer and the second outer layer can have the same polymer composition or different polymer composition. In embodiments, each of the first outer layer and the second outer layer have a thickness that is 10 to 30% of the total thickness of the multilayer film.

In some embodiments, the first outer layer and/or the second outer layer comprise an ethylene-based polymer such as an LLDPE, LDPE, MDPE, or HDPE. For example, in some embodiments, the first outer layer and/or the second outer layer comprise an LLDPE, an LDPE, or a blend thereof.

In embodiments where the first outer layer and/or the second outer layer comprise an LLDPE, the LLDPE can have a density less than or equal to 0.930 $g/cm^3$. All individual values and subranges less than or equal to 0.930 $g/cm^3$ are included and disclosed herein; for example, the density of the linear low density polyethylene can be from a lower limit of 0.870 $g/cm^3$ to an upper limit of 0.928, 0.925, 0.920 or 0.915 $g/cm^3$. All individual values and subranges between 0.870 and 0.930 $g/cm^3$ are included and disclosed herein.

In embodiments where the first outer layer and/or the second outer layer comprise an LLDPE, the LLDPE can have a melt index ($I_2$) in the range of from 0.1 g/10 min to 50 g/10 min. All individual values and subranges of from 0.1 g/10 min to 50 g/10 min are disclosed and included herein. For example, the LLDPE can have a melt index ($I_2$) in the range of from 0.1 g/10 min to 40 g/10 min, 0.1 g/10 min to 30 g/10 min, 0.1 g/10 min to 20 g/10 min, 0.1 g/10 min to 10 g/10 min, or 0.1 g/10 min to 5 g/10 min.

Commercially available examples of LLDPEs that can be used in the first outer layer and/or the second outer layer include those commercially available from The Dow Chemical Company under the name ELITE™ AT including, for example, ELITE™ AT 6410.

Core of Multilayer Film

The multilayer film comprises a core. The core comprises one or more core layers and comprises 100 wt.% ethylene-based polymers, including the ethylene-propylene copolymer (described below). The core is positioned between the first outer layer and the second outer layer. The core comprises a first core layer. In some embodiments, the multilayer film is a three layer film comprising a first outer layer, a second outer layer, and a core, the core comprising a first core layer. In other embodiments, the core comprises a first core layer, a second core layer, and a third core layer, wherein the first core layer is positioned between the second core layer and the third core layer, the second core layer is positioned between the first outer layer and the first core layer, and the third core layer is positioned between the first core layer and the second outer layer. In embodiments where the core comprises a first core layer, a second core layer, and a third core layer, the multilayer film comprises at least five layers (e.g., a multilayer film having the structure of first outer layer/second core layer/first core layer/third core layer/second outer layer).

The core comprises a first core layer. The first core layer comprises an ethylene-propylene copolymer comprising 60 to 95 wt.% of ethylene monomer and 5 to 40 wt.% of propylene comonomer. The ethylene-propylene copolymer has the following characteristics: a density in the range of from 0.865 to 0.920 $g/cm^3$; a melt index ($I_2$) of at least 0.5 g/10 min; and a molecular weight distribution (Mw/Mn) in the range of from 3.0 to 5.0. In some embodiments, the ethylene-propylene copolymer is formed in the presence of a catalyst composition comprising a single-site metallocene catalyst. In some embodiments, the ethylene-propylene copolymer has a single peak in an improved comonomer composition distribution (ICCD) elution profile between a temperature range of from 40 to 100°C.

The ethylene-propylene copolymer of the first core layer comprises 60 to 95 wt.% of ethylene monomer and 5 to 40 wt.% of propylene comonomer, based on total weight of the ethylene-propylene copolymer. All individual values and subranges of from 60 to 95 wt.% of ethylene monomer and 5 to 40 wt.% are disclosed and included herein. For example, the ethylene-propylene copolymer can comprise from from 60 to 90 wt.%, from 70 to 90 wt.%, or 80 to 90 wt.% of ethylene monomer and can comprise from from 10 to 40 wt.%, from 10 to 30 wt.%, or from 10 to 20 wt.%, propylene comonomer, based on total weight of the ethylene-propylene copolymer.

The ethylene-propylene copolymer has a density in the range of from 0.865 to 0.920 $g/cm^3$. All individual values and subranges of from 0.865 to 0.920 $g/cm^3$ are disclosed and included herein. For example, the ethylene-propylene copolymer can have a density in the range of from 0.865 to 0.910 $g/cm^3$, from 0.865 to 0.905 $g/cm^3$, from 0.865 to 0.900 $g/cm^3$, or from 0.865 to 0.895 $g/cm^3$.

In some embodiments, the ethylene-propylene copolymer has a heat of fusion in the range of from 40 to 110 J/g. All individual values and subranges of from 40 to 110 J/g are disclosed and included herein. For example, the ethylene-propylene copolymer can have a heat of fusion in the range of from 40 to 110 J/g, from 45 to 110 J/g, from 50 to 110 J/g, from 60 to 110 J/g, from 70 to 110 J/g, from 80 to 110 J/g, from 90 to 110 J/g, where heat of fusion is measured in accordance with the DSC test method described below.

The ethylene-propylene copolymer has a melt index ($I_2$) of at least 0.5 g/10 min. All individual values and subranges of at least 0.5 g/10 min are disclosed and included herein. For example, the ethylene-propylene copolymer can have a melt index ($I_2$) of at least 0.6 g/10 min, at least 0.7 g/10 min, at least 0.8 g/10 min, or at least 0.9 g/10 min, or can have a melt index ($I_2$) in the range of from 0.5 g/10 min to 500 g/10 min, from 0.5 g/10 min to 200 g/10 min, from 0.5 g/10 min to 100 g/10 min, from 0.5 g/10 min to 50 g/10 min, from 0.5 g/10 min to 10 g/10 min, or from 0.5 g/10 min to 2 g/10 min.

In some embodiments, the ethylene-propylene copolymer has a single peak in an improved comonomer composition distribution (ICCD) elution profile between a temperature range of from 40 to 100°C. The improved comonomer composition distribution (ICCD) profile of the first ethylene-propylene copolymer can be obtained via the test method described below.

The ethylene-propylene copolymer has a molecular weight distribution (Mw/Mn) in the range of from 3.0 to 5.0. All individual value and subrange of from 3.0 to 5.0 are disclosed and included herein. For example, the ethylene-propylene copolymer can have a molecular weight distribution (Mw/Mn) in the range of from 3.2 to 5.0, from 3.4 to 5.0, from 3.0 to 4.5, from 3.2 to 4.5, from 3.4 to 4.5, from 3.0 to 4.0, from 3.2 to 4.0, or from 3.4 to 4.0. Molecular weight distribution (Mw/Mn) is measured in accordance with the GPC test method described below.

In some embodiments, the ethylene-propylene copolymer is further characterized by having a melt flow ratio ($I_{10}/I_2$) of from 5 to 20. All individual values and subranges of from 5 to 20 are disclosed and included herein. For example, the ethylene-propylene copolymer can have a melt flow ratio ($I_{10}/I_2$) of from 5 to 20, from 6 to 20, from 7 to 20, from 8 to 20, from 9 to 10, from 10 to 20, from 5 to 15, from 6 to 15, from 7 to 15, from 8 to 15, from 9 to 15, from 6 to 10, from 6 to 9, or from 5 to 9.

In some embodiments, the ethylene-propylene copolymer has a proportion of inversely inserted propylene units based on 2, 1 insertion of greater than 0.7 wt.%, where weight percent is based on total weight of the ethylene-propylene copolymer. All individual values and subranges of greater than 0.7 wt.% are disclosed and included herein. For example, the ethylene-propylene copolymer can have a proportion of inversely inserted propylene units based on 2, 1 insertion of greater than 0.7 wt.%, greater than 0.8 wt.%, greater than 1.0 wt.%, greater than 1.5 wt.%, greater than 2.0 wt.%, or greater than 2.5 wt.%, or in the range of from 0.7 to 5.0 wt.%, from 0.7 to 4.5 wt.%, from 0.7 to 4.0 wt.%, from 0.7 to 3.5 wt.%, or from 0.7 to 3.2 wt.%, where weight percent is based on total weight of the ethylene-propylene copolymer. The proportion of inversely inserted propylene units based on 2, 1 insertion can be measured in accordance with the test method described below.

In some embodiments, the first core layer comprises from 20 to 40 wt.%, based on total weight of the first core layer, of the ethylene-propylene copolymer. All individual values and subranges of from 20 to 40 wt.% are disclosed and included herein. For example, the first core layer can comprise from 20 to 40 wt.%, from 20 to 35 wt.%, from 25 to 40 wt.%, or from 25 to 35 wt.%, of the ethylene-propylene copolymer, where weight percent (wt.%) is based on total weight of the first core layer. In other embodiments, the first core layer comprises from 80 to 100 wt.%, based on total weight of the first core layer, of the ethylene-propylene copolymer. All individual values and subranges of from 80 to 100 wt.% are disclosed and included herein. For example, the first core layer can comprise from 80 to 100 wt.%, from 80 to 95 wt.%, from 80 to 90 wt.%, or from 90 to 100 wt.%, of the ethylene-propylene copolymer, where weight percent (wt.%) is based on total weight of the first core layer.

In some embodiments, in addition to the ethylene-propylene copolymer, the first core layer can comprise from 60 to 80 wt.%, based on total weight of the first core layer, of an ethylene-based polymer such as an LLDPE, LDPE, MDPE, HDPE or combination thereof. For example, in some embodiments, the first core layer comprises from 60 to 80 wt.% of an LLDPE.

In embodiments where the first core layer comprises an LLDPE, the LLDPE can have a density less than or equal to 0.930 g/cm$^3$. All individual values and subranges less than or equal to 0.930 g/cm$^3$ are included and disclosed herein; for example, the density of the linear low density polyethylene can be from a lower limit of 0.870 g/cm$^3$ to an upper limit of 0.928, 0.925, 0.920 or 0.915 g/cm$^3$. All individual values and subranges between 0.870 and 0.930 g/cm$^3$ are included and disclosed herein.

In embodiments where the first core layer comprises an LLDPE, the LLDPE can have a melt index ($I_2$) in the range of from 0.1 g/10 min to 50 g/10 min. All individual values and subranges of from 0.1 g/10 min to 50 g/10 min are disclosed and included herein. For example, the LLDPE can have a melt index ($I_2$) in the range of from 0.1 g/10 min to 40 g/10 min, 0.1 g/10 min to 30 g/10 min, 0.1 g/10 min to 20 g/10 min, 0.1 g/10 min to 10 g/10 min, or 0.1 g/10 min to 5 g/10 min.

In some embodiments, in addition to the first core layer, the core of the multilayer film further comprises a second core layer and a third core layer, wherein the second core layer is positioned between the first outer layer and the first core layer, and the third core layer is positioned between the second outer layer and the first core layer.

In some embodiments, the second core layer and the third core layer have the same polymer composition as the first core layer. In other embodiments, the second core layer and/or the third core layer have a different polymer composition than the first core layer. For example, in some embodiments, the second core layer and/or the third core layer also comprise an ethylene-propylene copolymer comprising 60 to 95 wt.% of ethylene monomer and 5 to 40 wt.% of propylene comonomer, the ethylene-propylene copolymer having the following characteristics: a density in the range of from 0.865 to 0.920 g/cc; a melt index (I2) of at least 0.5 g/10 min; and a molecular weight distribution, Mw/Mn, of from 3.0 to 5.0. In such embodiments, the second core layer and/or the third core layer can have the same polymeric composition as the first core layer, and the ethylene-propylene copolymer of the second core layer and/or third core layer can have the same characteristics as the ethylene-propylene copolymer of the first core layer (described above).

In embodiments where the multilayer film comprises a first core layer, a second core layer, and a third core layer, each of the second core layer and third core layer can comprise an ethylene-based polymer such as an LLDPE, LDPE, MDPE, HDPE or combination thereof. For example, in some embodiments, each of the second core layer and the third core layer, separately, comprises an LLDPE, an LDPE, or a blend thereof. In embodiments where each of the second core layer and the third core layer, separately, comprises an LLDPE, the LLDPE can have a density less than or equal to 0.930 g/cm$^3$. All individual values and subranges less than or equal to 0.930 g/cm$^3$ are included and disclosed herein; for example, the density of the linear low density polyethylene can be from a lower limit of 0.870 g/cm$^3$ to an upper limit of 0.928, 0.925, 0.920 or 0.915 g/cm$^3$. All individual values and subranges between 0.870 and 0.930 g/cm$^3$ are included and disclosed herein.

In embodiments where each of the second core layer and the third core layer comprises an LLDPE, the LLDPE can have a melt index (I$_2$) in the range of from 0.1 g/10 min to 50 g/10 min. All individual values and subranges of from 0.1 g/10 min to 50 g/10 min are disclosed and included herein. For example, the LLDPE can have a melt index (I$_2$) in the range of from 0.1 g/10 min to 40 g/10 min, 0.1 g/10 min to 30 g/10 min, 0.1 g/10 min to 20 g/10 min, 0.1 g/10 min to 10 g/10 min, or 0.1 g/10 min to 5 g/10 min.

In some embodiments, each of the first core layer and the third core layer have a thickness that is 5 to 30% of the total thickness of the multilayer film, or alternatively 10 to 30% of the total thickness of the multilayer film. In some embodiments, the second core layer has a total thickness of 20 to 70% of the total thickness of the multilayer film. In some embodiments, the core of the multilayer film has a thickness that is 70 to 90% of the total thickness of the multilayer film.

Additives

It should be understood that any of the foregoing layers can further comprise one or more additives as known to those of skill in the art such as, for example, antioxidants, ultraviolet light stabilizers, thermal stabilizers, slip agents, antiblock agents, antistatic agents, pigments or colorants, processing aids, crosslinking catalysts, flame retardants, fillers and foaming agents. For example, in some embodiments, the first outer layer and the second outer layer each comprise an antiblock agent.

Multilayer Films

Multilayer films disclosed herein can be produced using techniques known to those of skill in the art based on the teachings herein. For example, the multilayer film may be produced by coextrusion. The formation of coextruded multilayer films is known in the art and applicable to the present disclosure. Coextrusion systems for making multilayer films employ at least two extruders feeding a common die assembly. The number of extruders is dependent upon the number of different materials or polymers comprising the coextruded film. For example, a five-layer coextrusion may require up to five extruders although less may be used if two or more of the layers are made of the same materials or polymers.

The multilayer film of the present invention, in various embodiments, can have several desirable properties. Without being bound by any theory, the specific structure of the multilayer film, along with the inclusion of the specific ethylene-propylene copolymer in the core, can result in the multilayer film having high tear resistance properties. In some embodiments, the multilayer film of the present invention exhibits machine direction tear resistance of at least 1700 g (or at least 1900 g, or at least 2000 g, or at least 2100 g, or at least 2200 g), or in the range of from 1700 g to 3000 g, from 2000 g to 3000 g, from 2100 g to 3000 g, or from 2200 g to 3000 g. Machine direction tear resistance can also be expressed in grams per micrometer thickness of the multilayer film. For example, in some embodiments, the multilayer film of the present invention exhibits machine direction tear resistance of at least 170 g/$\mu$m (or at least 190 g/$\mu$m, or at least 200 g/$\mu$m, or at least 210 g/$\mu$m, or at least 220 g/$\mu$m), or in the range of from 170 to 300 g/$\mu$m, from 200 to 300 g/$\mu$m, from 210 to 300 g/$\mu$m, or from 220 to 300 g/$\mu$m. Machine direction tear resistance can be measured in accordance with ASTM D1922-09.

Likewise, in some embodiments, the multilayer film exhibits cross direction tear resistance of at least 1400 g, (or at least 1600 g, or at least 1800 g, or at least 1900 g, or at least 2000 g, or at least 2100 g, or at least 2200 g), or in the range of from 1400 g to 3000 g, from 2000 g to 3000 g, from 2100 g to 3000 g, or from 2200 g to 3000 g. Cross direction tear resistance can also be expressed in grams per micrometer thickness of the multilayer film. For example, in some embodiments, the multilayer film exhibits cross direction tear resistance of at 140 g/$\mu$m (or at least 160 g/$\mu$m, or at least 180 g/$\mu$m, or at least 190 g/$\mu$m, or at least 200 g/$\mu$m, or at least 210 g/$\mu$m, or at least 220 g/$\mu$m), or in the range of from 140 to

300 g/$\mu$m, from 200 to 300 g/$\mu$m, from 210 to 300 g/$\mu$m, or from 220 to 300 g/$\mu$m. Cross direction tear resistance can be measured in accordance with ASTM D1922-09.

In some embodiments, the multilayer film has a thickness between 15 to 150 microns, 50 and 150 $\mu$m (microns), or alternatively between 75 and 125 $\mu$m (microns), or alternatively between 90 and 110 $\mu$m (microns).

In some embodiments, the multilayer film of the present invention comprises at least 90 wt.% ethylene-based polymer, or at least 95 wt.% ethylene-based polymer, or at least 99 wt.% ethylene-based polymer, or at least 99.5 wt.% ethylene-based polymer, or at least 99.9 wt.% ethylene-based polymer, based on the overall weight of the multilayer film. Because the multilayer films in some embodiments comprise at least 90 wt.% ethylene-based polymer, they can be compatible with polyethylene recycling streams.

## Stretch Hood Film

In one embodiment, the multilayer film of the present invention is a stretch hood film. A stretch hood is a tube of film sealed on one end, which is stretched over a palletized load to secure the contents to the pallet. The film is cut to the appropriate length, heat sealed on the top end, and gathered on four 'fingers.' These fingers stretch the film in the horizontal (cross) direction until the film dimensions are slightly larger than the load dimensions, then draw the stretched film down over the pallet, unrolling it as they move. By varying the unrolling rate, a degree of vertical (machine) direction stretch can be obtained to better hold the load on the pallet. At the bottom of the pallet, the fingers release the film, which typically wraps under the pallet bottom. Stretch hood films can be produced using techniques known to those of skill in the art based on the teachings herein.

## Articles

Embodiments of the present invention also provide articles including any of the inventive multilayer films described herein. Examples of such articles can include wraps, packages, flexible packages, pouches, and sachets. Articles of the present invention can be formed from the multilayer films disclosed herein using techniques known to those of skill in the art in view of the teachings herein.

## **TEST METHODS**

## Density

Density is measured in accordance with ASTM D792, and expressed in grams/cm$^3$ (g/cm$^3$).

## Melt Index ($I_2$ and $I_{10}$)

Melt index ($I_2$) is measured in accordance with ASTM D-1238 at 190°C at 2.16 kg. Melt index ($I_{10}$) is measured in accordance with ASTM D-1238 at 190°C at 10 kg. The values for melt indices are reported in g/10 min, which corresponds to grams eluted per 10 minutes. Melt flow rate is $I_{10}/I_2$.

## DSC Method - Heat of Fusion

Differential scanning calorimetry is a common technique that can be used to examine the melting and crystallization of semi-crystalline polymers. General principles of DSC measurements and applications of DSC to studying semi-crystalline polymers are described in standard texts (e.g., E. A. Turi, ed., Thermal Characterization of Polymeric Materials, Academic Press, 1981).

The Heat of Fusion is determined using DSC from TA Instruments, Inc. The test is conducted in reference to ASTM standard D3428. The calibration is performed by preparing 2-3 mg of indium and placing it in a T-zero aluminum pan. The pan is then loaded into the DSC instrument and subjected to the following heating program cycle: 1) equilibrate test chamber at 180°C, 2) hold temperature at 180 °C for 1 min., 3) ramp temperature down to 130 °C at 10 °C/min., 4) hold temperature at 130°C for 3 min., and 5) ramp temperature at 10 °C/min. to 180 °C. Once completed, the last heat curve conducted in step 5 is analyzed to determine the melting temperature of the indium sample. The DSC is considered to be working in compliance should the melting temperature be within a 0.5°C tolerance of 156.6 °C.

For sample testing, the polymer samples are first pressed into a thin film at a temperature of 190°C. About 4 to 5 mg of sample is weighed out and placed in the DSC pan. The lid is crimped on the pan to ensure a closed atmosphere. The sample pan is placed in the DSC cell and is equilibrated at 180°C. The sample is kept at this temperature for 5 minutes. Then the sample is cooled at a rate of 10°C/min to -90°C and kept isothermally at that temperature for 5 minutes. Subsequently, the sample is heated at a rate of 10°C/min to 150°C (to ensure complete melting); this step is designated as the 2nd heating curve. The resulting enthalpy curves are analyzed for peak melt temperature, onset and peak crystallization temperatures, and the heat of fusion (also known as heat of melting), ΔHf. The heat of fusion, in Joules/gram, is measured from the 2nd heating curve by performing a linear integration of the melting endotherm in accordance to the baseline.

Improved Comonomer Composition Distribution (ICCD)

Improved method for comonomer content analysis (iCCD) was developed in 2015 (Cong and Parrott et al., WO2017040127A1). iCCD test was performed with Crystallization Elution Fractionation instrumentation (CEF) (PolymerChar, Spain) equipped with IR-5 detector (PolymerChar, Spain) and two angle light scattering detector Model 2040 (Precision Detectors, currently Agilent Technologies). A guard column packed with 20-27 micron glass (MoSCi Corporation, USA) in a 5 cm or 10 cm (length)X1/4" (ID) stainless was installed just before IR-5 detector in the detector oven. Ortho-dichlorobenzene (ODCB, 99% anhydrous grade or technical grade) was used. Silica gel 40 (particle size 0.2~0.5 mm, catalogue number 10181-3) from EMD Chemicals was obtained (can be used to dry ODCB solvent before). Dried silica was packed into three emptied HT-GPC columns to further purify ODCB as eluent. The CEF instrument is equipped with an autosampler with N2 purging capability. ODCB is sparged with dried nitrogen (N2) for one hour before use. Sample preparation was done with autosampler at 4 mg/ml (unless otherwise specified) under shaking at 160°C for 1 hour. The injection volume was 300µl. The temperature profile of iCCD was: crystallization at 3°C/min from 105°C to 30°C, the thermal equilibrium at 30°C for 2 minute (including Soluble Fraction Elution Time being set as 2 minutes), elution at 3°C/min from 30°C to 140°C. The flow rate during crystallization is 0.0 ml/min. The flow rate during elution is 0.50 ml/min. The data was collected at one data point/second.

The iCCD column was packed with gold coated nickel particles (Bright 7GNM8-NiS, Nippon Chemical Industrial Co.) in a 15cm (length)X1/4" (ID) stainless tubing. The column packing and conditioning were with a slurry method according to the reference (Cong, R.; Parrott, A.; Hollis, C.; Cheatham, M. WO2017040127A1). The final pressure with TCB slurry packing was 150 Bars.

Column temperature calibration was performed by using a mixture of the Reference Material Linear homopolymer polyethylene (having zero comonomer content, Melt index ($I_2$) of 1.0, polydispersity $M_w/M_n$ approximately 2.6 by conventional gel permeation chromatography, 1.0mg/ml) and Eicosane (2mg/ml) in ODCB. iCCD temperature calibration consisted of four steps: (1) Calculating the delay volume defined as the temperature offset between the measured peak elution temperature of Eicosane minus 30.00° C; (2) Subtracting the temperature offset of the elution temperature from iCCD raw temperature data. It is noted that this temperature offset is a function of experimental conditions, such as elution temperature, elution flow rate, etc.; (3) Creating a linear calibration line transforming the elution temperature across a range of 30.00° C and 140.00° C so that the linear homopolymer polyethylene reference had a peak temperature at 101.0°C, and Eicosane had a peak temperature of 30.0° C; (4) For the soluble fraction measured isothermally at 30° C, the elution temperature below 30.0° C is extrapolated linearly by using the elution heating rate of 3° C/min according to the reference (Cerk and Cong et al., US9,688,795).

The comonomer content versus elution temperature of iCCD was constructed by using 12 reference materials (ethylene homopolymer and ethylene-octene random copolymer made with single site metallocene catalyst, having ethylene equivalent weight average molecular weight ranging from 35,000 to 128,000). All of these reference materials were analyzed same way as specified previously at 4 mg/mL. The reported elution peak temperatures followed the figure of octene mole% versus elution temperature of iCCD at $R^2$ of 0.978.

Molecular weight of polymer and the molecular weight of the polymer fractions was determined directly from LS detector (90 degree angle) and concentration detector (IR-5) according Rayleigh-Gans-Debys approximation (Striegel and Yau, Modern Size Exclusion Liquid Chromatogram, Page 242 and Page 263) by assuming the form factor of 1 and all the virial coefficients equal to zero. Integration windows are set to integrate all the chromatograms in the elution temperature (temperature calibration is specified above) range from 23.0 to 120°C.

The calculation of Molecular Weight (Mw) from iCCD includes the following steps: (1) Measuring the interdetector offset. The offset is defined as the geometric volume offset between LS with respect to concentration detector. It is calculated as the difference in the elution volume (mL) of polymer peak between concentration detector and LS chromatograms. It is converted to the temperature offset by using elution thermal rate and elution flow rate. A linear high density polyethylene (having zero comonomer content, Melt index ($I_2$) of 1.0, polydispersity $M_w/M_n$ approximately 2.6 by conventional gel permeation chromatography) is used. Same experimental conditions as the normal iCCD method above are used except the following parameters: crystallization at 10°C/min from 140°C to 137°C, the thermal equilibrium at 137°C for 1 minute as Soluble Fraction Elution Time, soluble fraction (SF) time of 7 minutes, elution at 3°C/min from 137°C to 142°C. The flow rate during crystallization is 0.0 ml/min. The flow rate during elution is 0.80 ml/min. Sample concentration is 1.0mg/ml. (2) Each LS datapoint in LS chromatogram is shifted to correct for the interdetector offset before integration. (3) Baseline subtracted LS and concentration chromatograms are integrated for the whole eluting temperature range of the Step (1). The MW detector constant is calculated by using a known MW HDPE sample in the range of 100,000 to 140,000Mw and the area ratio of the LS and concentration integrated signals. (4) Mw of the polymer was calculated by using the ratio of integrated light scattering detector (90 degree angle) to the concentration detector and using the MW detector constant.

Conventional GPC (Mw/Mn)

Conventional GPC is obtained by high temperature gel permeation chromatography (GPC) equipment (PolymerChar, Spain). The IR5 detector ("measurement channel") is used as a concentration detector. GPCOne software (PolymerChar, Spain) is used to calculate weight-average (Mw), and number-average (Mn) molecular weight of the polymer and to determine molecular weight distribution (Mw/Mn). The method uses three four 20 micron PL gel mixed A columns (Agilent Technologies, column dimension 100 X 7.6 mm) operating at a system temperature of 150 °C. Samples are prepared at a 2 mg/mL concentration in 1,2,4-trichlorobenzene solvent containing 200 part per million of antioxidant butylated hydroxytoluene (BHT) for 3 hours at 160 °C with a gentle shaking by autosampler (PolymerChar, Spain). The flow rate is 1.0 mL/min, the injection size is 200 microliters. GPCOne software is used to calculate the plate count. The chromatographic system must have a minimum of 22,000 plates.

The GPC column set is calibrated by running at least 20 narrow molecular weight distribution polystyrene standards. The calibration uses a third order fit for the system with three 10 micron PL gel mixed B columns or a fifth order fit for the system with four 20 micron PL gel mixed A columns. The molecular weight (MW) of the standards range from 580 g/mol to 8,400,000 g/mol, and the standards are contained in 6 "cocktail" mixtures. Each standard mixture has approximately a decade of separation between individual molecular weights. The standard mixtures are purchased from Agilent Technologies. The polystyrene standards are prepared at "0.025 g in 50 mL of solvent" for molecular weights equal to, or greater than, 1,000,000 g/mol, and at "0.05 g in 50 mL of solvent" for molecular weights less than 1,000,000 g/mol. The polystyrene standards are dissolved at 80°C, with gentle agitation, for 30 minutes. The narrow standards mixtures are run first, and in order of decreasing highest molecular weight component, to minimize degradation. The polystyrene standard peak molecular weights are converted to polyethylene molecular weights using Equation (1) (as described in Williams and Ward, J. Polym. Sci., Polym. Letters, 6, 621 (1968)):

$$MW_{PE} = A \times (MW_{PS})^B \text{ (Eq. 1)}$$

where MW is the molecular weight of polyethylene (PE) or polystyrene (PS) as marked, and B is equal to 1.0. It is known to those of ordinary skill in the art that A may be in a range of about 0.38 to about 0.44 such that the A value yields 52,000 MWPE for Standard Reference Materials (SRM) 1475a. Use of this polyethylene calibration method to obtain molecular weight values, such as the molecular weight distribution (MWD or Mw/Mn), and related statistics, is defined here as the modified method of Williams and Ward. The number-average molecular weight, the weight-average molecular weight, and the z-average molecular weight are calculated from the following equations:

$$M_{n,cc} = \sum w_i \Big/ \sum \left( w_i / M_{cc,i} \right) \quad \text{(Eq. 2)}$$

$$M_{w,cc} = \sum w_i M_{cc,i} \quad \text{(Eq. 3)}$$

$$M_{z,cc} = \sum \left( w_i M_{cc,i}^2 \right) / \sum \left( w_i M_{cc,i} \right) \quad \text{(Eq. 4)}$$

where $M_{n,cc}$, $M_{w,cc}$, and $M_{z,cc}$ (in g/mole) are the number-, weight-, and z-average molecular weight obtained from the conventional calibration, respectively. $w_i$ is the weight fraction of the polyethylene molecules eluted at retention volume $V_i$. $M_{cc,i}$ is the molecular weight (in g/mole) of the polyethylene molecules eluted at retention volume $V_i$ obtained using the conventional calibration (see Equation (1)).

The chromatographic peaks should be set to include area marking a significant visible departure from baseline when the chromatogram is viewed at 20 percent peak height. The baseline should not be integrated to less than 100 polyethylene-equivalent molecular weight and care must be used to account for anti-oxidant mismatch from the prepared sample and the chromatographic mobile phase.

Use of a decane flow rate marker is shown in the IR5 chromatogram. At no point should the baseline (response) Y-value difference between the start and the end of the baseline be greater than 3 percent of the integrated peak height of the chromatogram. In such a case, the chromatographic sample must be handled through proper matching of the sample and mobile phase antioxidant.

w (wt. fraction greater than $10^5$ g/mole) is calculated according the MWD curve ($w_i$ versus log $M_{cc,i}$) obtained from GPCOne software according to Equation (5)

$$w = \int_{\log M_{cc,i}=5}^{\log M_{cc,i}=7} w_i \, d \log M_{cc,i} \Big/ \int_{\log M_{cc,i}=2}^{\log M_{cc,i}=7} w_i \, d \log M_{cc,i} \quad \text{(Eq. 5)}$$

Comonomer Content and Proportion of Inversely Inserted Propylene Units Based on 2, 1 Insertion

The comonomer content was measured by 13C NMR according to Randall's calculation described in European Patent No. 3390056 B1. The ethylene-propylene copolymers according to embodiments disclosed herein can have a proportion of inversely inserted propylene units based on 2, 1 insertion of greater than 0.7 wt.%, where weight percent is based on total weight of the ethylene-propylene copolymer. The proportion of the 2,1 insertions to all of the propylene insertions in a propylene polymer was calculated in accordance with the calculation and test method described in European Patent No. 3390056 B1. As described in European Patent No. 3390056 B1, the proportion of the 2,1 insertions to all of the propylene insertions in a propylene polymer was calculated by the following formula with reference to article in the journal Polymer, Vol. 30 (1989), p. 1350. Proportion of inversely inserted unit based on 2, 1 insertion (%) =

$$\frac{0.25 I\alpha\beta(structure(i)) + 0.5 I\alpha\beta(structure(ii))}{I\alpha\alpha + I\alpha\beta(structure(ii)) + 0.5(I\alpha\gamma + I\alpha\beta(structure(i)) + I\alpha\delta)} x100$$

The samples were prepared by adding approximately 2.6g of a 75/25 mixture of tetrachloroethane/tetrachloroethane-d2 that is 0.025M in chromium acetylacetonate (relaxation agent) to 0.2g sample in a 10mm NMR tube. The samples were dissolved and homogenized by heating the tube and its contents to 150°C. The data were collected using a Bruker 600 MHz spectrometer equipped with a multinuclear high-temperature CryoProbe. The data were acquired using 2560 scans per data file, a 7.8 second pulse repetition delay with a sample temperature of 120°C. The acquisitions were carried out using spectral width of 35,700Hz and a file size of 65K data points.

Tear Resistance in Cross Direction (CD) and Machine Direction (MD)

Tear resistance of the example multilayer films is measured in both the machine direction (MD) and cross direction (CD) in accordance with ASTM D1922-09. The ASTM D1922-09 standard determines the average force to propagate tearing in the machine and cross direction through a specified length of plastic film after the tear has been started.

## EXAMPLES

The following materials are included in the example multilayer films discussed below.

ELITE™ 6410, a linear low density polyethylene having a density of 0.912 g/cm³ and melt index ($I_2$) of 0.85 g/10 min and commercially available from The Dow Chemical Company (Midland, MI). ELITE™ 6410 is an ethylene-based polymer as that term is defined herein.

XZ89507.00 is a linear low density polyethylene commercially available from The Dow Chemical Company (Midland, MI). XZ89507.00 has a density of 0.902 g/cm³ and melt index ($I_2$) of 0.85 g/10 min. XZ89507.00 is an ethylene-based polymer as that term is defined herein.

XUS 39003.00 (also referred to herein as "Poly. 1") is an ethylene-propylene copolymer commercially available from The Dow Chemical Company (Midland, MI). Poly. 1 comprises 27.1 wt.% propylene comonomer and 72.9 wt.% ethylene monomer and has a density of 0.867 g/cm³, a melt index ($I_2$) of 0.90 g/10 min, a $I_{10}/I_2$ of 10.82, a heat of fusion of 50.24 J/g, and a Mw/Mn of 3.98. Poly. 1 has a proportion of inversely inserted propylene units based on 2, 1 insertion of 0.8 wt.%, where weight percent is based on total weight of Poly 1. Poly. 1 is an ethylene-based polymer as that term is defined herein.

XUS 39005.00 (also referred to herein as "Poly. 2") is an ethylene-propylene copolymer commercially available from The Dow Chemical Company (Midland, MI). Poly. 2 comprises 17.7 wt.% propylene comonomer and 82.3 wt.% ethylene monomer and has a density of 0.893 g/cm³, a melt index ($I_2$) of 1.0 g/10 min, a $I_{10}/I_2$ of 17.50, a heat of fusion of 90.73 J/g, and a Mw/Mn of 3.99. As can be seen in Figure 1, Poly. 2 has a single peak in an improved comonomer composition distribution (ICCD) elution profile between a temperature range of from 40 to 100°C. Poly. 2 has a proportion of inversely inserted propylene units based on 2, 1 insertion of 3.0 wt.%, where weight percent is based on total weight of Poly 2. Poly. 2 is an ethylene-based polymer as that term is defined herein.

DOWLEX™ GM 8090 is a linear low density polyethylene commercially available from The Dow Chemical Company (Midland, MI). DOWLEX™ GM 8090 has a density of 0.916 g/cm³ and melt index ($I_2$) of 1.0 g/10 min. DOWLEX™ GM 8090 is an ethylene-based polymer as that term is defined herein.

LDPE 150E is a low density polyethylene commercially available from The Dow Chemical Company (Midland, MI). LDPE 150E has a density of 0.921 g/cm³ and melt index ($I_2$) of 0.25 g/10 min. LDPE 150E is an ethylene based polymer as that term is defined herein.

VERSIFY™ 2300, a propylene elastomer having a density of 0.867 g/cm³. VERSIFY™ 2300 is commercially available from The Dow Chemical Company (Midland, MI). VERSIFY™ 2300 is not an ethylene-based polymer as that term is defined herein.

AFFINITY™ PF1140 is an ethylene-octene polyethylene plastomer having a density of 0.897 g/cm³ and a melt index ($I_2$) of 1.6 g/10 min. AFFINITY™ PF1140 is commercially available from The Dow Chemical Company (Midland, MI). AFFINITY™ PF1140 is an ethylene-based polymer as that term is defined herein.

AFFINITY™ EG 8100G is an ethylene-octene polyethylene plastomer having a density of 0.870 g/cm³ and a melt index ($I_2$) of 1.0 g/10 min. AFFINITY™ EG 8100G is commercially available from The Dow Chemical Company (Midland, MI). AFFINITY™ EG 8100G is an ethylene-based polymer as that term is defined herein.

Multilayer films are formed using the materials above. The multilayer films are produced on a Collin coextrusion blown film line, with a Blow-up Ratio (BUR) of 3.5 and a total thickness of 100μm. The Collin coextrusion blown film line is produced by Collin Lab & Pilot Solutions GmbH. The Collin coextrusion blown film line is configured as shown in Table 1 below to prepare the multilayer films described in Tables 2 and 3. Table 2 reports the structure of three-layer multilayer films that are formed. Table 3 reports the structure of the five-layer multilayer films that are formed with a structure of 20/15/30/15/20 μm (micron) layers. Table 4 reports the structure of the five-layer multilayer films that are formed with a structure of 20/20/20/20/20 μm (micron) layers. The Inventive and Comparative Examples have a thickness of 100 μm (microns (μ)).

**Table 1 - Blown Film Line Parameters**

| | |
|---|---|
| **Maximum hauloff speed** | 30 m/min |
| **Extruders size** up to 9 Layers, 9 extruders: | 5(extr) x 20-25D (A/B/C/D/E) / 4(extr) x 25-25D (F/G/H/I) |
| **Die size** | 100 mm |
| **Die Gap** | 1.8 mm |
| **Max. Output** | 8-50 kg/hour |
| **Extruder size distribution:** | 20mm /25mm /25mm /20mm /20mm /20mm/ 25mm /25mm /20mm |
| **Thickness working range** | 10-250 μm (micron) |

(continued)

| Max. Layflat width | 550mm |
|---|---|

**Table 2 - Three Layer Multilayer Film Structures**

| Example (Ex.) | First Outer Layer (20μ) | Core Layer (60μ) | Second Outer Layer (20μ) |
|---|---|---|---|
| Comparative Ex. 1 | ELITE™ AT 6410 | 70 wt.% XZ89507.00 + 30 wt.% VERSIFY™ 2300 | ELITE™ AT 6410 |
| Inventive Ex. 1 | ELITE™ AT 6410 | 70 wt.% XZ89507.00 + 30 wt.% Poly. 1 | ELITE™ AT 6410 |
| Inventive Ex. 2 | ELITE™ AT 6410 | 70 wt.% XZ89507.00 + 30 wt.% Poly. 2 | ELITE™ AT 6410 |

**Table 3 - Five Layer Multilayer Film Structures**

| Example (Ex.) | First Outer Layer (20μ) | Core | | | Second Outer Layer (20μ) |
|---|---|---|---|---|---|
| | | 2nd Core Layer (15μ) | 1st Core Layer (30μ) | 3rd Core Layer (15μ) | |
| Comparative Ex. 2 | ELITE™ AT 6410 | XZ89507.00 | VERSIFY™ 2300 | XZ89507.00 | ELITE™ AT 6410 |
| Inventive Ex. 3 | ELITE™ AT 6410 | XZ89507.00 | Poly. 1 | XZ89507.00 | ELITE™ AT 6410 |
| Inventive Ex. 4 | ELITE™ AT 6410 | XZ89507.00 | Poly. 2 | XZ89507.00 | ELITE™ AT 6410 |

**Table 4 - Five Layer Multilayer Film Structures**

| Example (Ex.) | First Outer Layer (20μ) | Core | | | Second Outer Layer (20μ) |
|---|---|---|---|---|---|
| | | 2nd Core Layer (20μ) | 1st Core Layer (20μ) | 3rd Core Layer (20μ) | |
| Comparative Ex. 3 | DOWLEX™ GM 8090 + LDPE 150E 15% | XZ89507.00 | VERSIFY™ 2300 | XZ89507.00 | DOWLEX™ GM 8090 + LDPE 150E 15% |
| Comparative Ex. 4 | DOWLEX™ GM 8090 + LDPE 150E 15% | XZ89507.00 | AFFINITY™ PF1140 | XZ89507.00 | DOWLEX™ GM 8090 + LDPE 150E 15% |
| Comparative Ex. 5 | DOWLEX™ GM 8090 + LDPE 150E 15% | XZ89507.00 | AFFINITY™ EG 8100G | XZ89507.00 | DOWLEX™ GM 8090 + LDPE 150E 15% |

The tear resistance in the machine direction (MD) and cross direction (CD) is measured for each of the Comparative and Inventive Examples. The results are reported in Table 5 below. As can be seen from the results, the Inventive Examples exhibit comparable or improved CD tear resistance and MD resistance over the Comparative Examples. The Inventive Examples include all ethylene-based polymers, which are desirable for polyethylene recycling streams, whereas Comparative Examples 1-3 do not. Comparative Examples 4 and 5 comprise an ethylene-octene copolymer in the core as opposed to ethylene-propylene copolymer in the core and exhibit poor tear strength in comparison to the Inventive Examples. The Inventive Examples exhibit unexpectedly superior tear strength properties in comparison to these comparative examples.

**Table 5 - MD and CD Tear Resistance of Examples**

| Ex. | Thickness (μm) | CD Tear Resistance (g) | MD Tear Resistance (g) |
|---|---|---|---|
| Comp. Ex. 1 | 100 | 1729 | 1664 |
| Inv. Ex. 1 | 100 | 1634 | 1458 |
| Inv. Ex. 2 | 100 | 1880 | 1730 |
| Comp. Ex. 2 | 100 | 2507 | 2368 |

(continued)

| Ex. | Thickness (μm) | CD Tear Resistance (g) | MD Tear Resistance (g) |
|---|---|---|---|
| Comp. Ex. 3 | 100 | 2297 | 1947 |
| Comp. Ex. 4 | 100 | 1769 | 1569 |
| Comp. Ex. 5 | 100 | 1464 | 1214 |
| Inv. Ex. 3 | 100 | 2520 | 2290 |
| Inv. Ex. 4 | 100 | 2530 | 2390 |

The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document, the meaning or definition assigned to that term in this document shall govern.

**Claims**

1. A multilayer film comprising:

   a first outer layer, a second outer layer, and a core, the core comprising one or more core layers; wherein the core is positioned between the first outer layer and the second outer layer; wherein the core comprises 100 wt.% ethylene-based polymers, based on the total polymer weight of the core; and wherein a first core layer comprises an ethylene-propylene copolymer comprising 60 to 95 wt.% of ethylene monomer and 5 to 40 wt.% of propylene comonomer, the ethylene-propylene copolymer having the following characteristics:
   a density in the range of from 0.865 to 0.920 g/cm$^3$, measured in accordance with ASTM D792;
   a melt index ($I_2$) of at least 0.5 g/10 min, measured in accordance with ASTM D-1238 at 190°C at 2.16 kg; and
   a molecular weight distribution, Mw/Mn, of from 3.0 to 5.0, measured as described in the description.

2. The film of claim 1, wherein the ethylene-propylene copolymer is further **characterized by** having a single peak in an improved comonomer composition distribution (ICCD) elution profile between a temperature range of from 40 to 100°C, measured as described in the description.

3. The film of any preceding claim, wherein the ethylene-propylene copolymer is further **characterized by** having a melt flow ratio, $I_{10}/I_2$, of from 5 to 20, wherein melt index ($I_2$) is measured in accordance with ASTM D-1238 at 190°C at 2.16 kg and melt index ($I_{10}$) is measured in accordance with ASTM D-1238 at 190°C at 10 kg.

4. The film of any preceding claim, wherein the first core layer further comprises a linear low density polyethylene (LLDPE).

5. The film of any preceding claim, wherein each of the first outer layer and the second outer layer, separately, comprise a linear low density polyethylene (LLDPE).

6. The film of any preceding claim, wherein the core further comprises a second core layer and a third core layer, wherein the second core layer is positioned between the first outer layer and the first core layer and the third core layer is positioned between the first core layer and the second outer layer.

7. The film of claim 6, wherein each of the second core layer and the third core layer, separately, comprise a linear low density polyethylene (LLDPE).

8. The film of any preceding claim, wherein the film is a machine direction oriented film.

9. The film of any preceding claim, wherein the film is a stretch hood film.

**Patentansprüche**

1. Mehrschichtfolie, umfassend:

   eine erste Außenschicht, eine zweite Außenschicht und einen Kern, wobei der Kern eine oder mehrere Kernschichten umfasst; wobei der Kern zwischen der ersten Außenschicht und der zweiten Außenschicht positioniert ist; wobei der Kern zu 100 Gew.-% ethylenbasierte Polymere umfasst, basierend auf dem Gesamtpolymergewicht des Kerns; und wobei eine erste Kernschicht ein Ethylen-Propylen-Copolymer umfasst, das zu 60 bis 95 Gew.-% Ethylenmonomer und zu 5 bis 40 Gew.-% Propylencomonomer umfasst, wobei das Ethylen-Propylen-Copolymer die folgenden Eigenschaften aufweist:
   eine Dichte im Bereich von 0,865 bis 0,920 g/cm$^3$, gemessen gemäß ASTM D792;
   einen Schmelzindex ($I_2$) von mindestens 0,5 g/10 min, gemessen gemäß ASTM D-1238 bei 190 °C bei 2,16 kg; und
   eine Molekulargewichtsverteilung, Mw/Mn, von 3,0 bis 5,0, gemessen wie in der Beschreibung beschrieben.

2. Folie nach Anspruch 1, wobei das Ethylen-Propylen-Copolymer ferner **dadurch gekennzeichnet ist, dass** es einen einzelnen Peak in einem Elutionsprofil mit verbesserter Comonomerzusammensetzungsverteilung (ICCD) in einem Temperaturbereich von 40 bis 100 °C aufweist, gemessen wie in der Beschreibung beschrieben.

3. Folie nach einem der vorstehenden Ansprüche, wobei das Ethylen-Propylen-Copolymer ferner **dadurch gekennzeichnet, dass** es ein Schmelzflussverhältnis, $I_{10}/I_2$, von 5 bis 20 aufweist, wobei der Schmelzindex ($I_2$) gemäß ASTM D-1238 bei 190 °C bei 2,16 kg gemessen wird und der Schmelzindex ($I_{10}$) gemäß ASTM D-1238 bei 190 °C bei 10 kg gemessen wird.

4. Folie nach einem der vorstehenden Ansprüche, wobei die erste Kernschicht ferner ein lineares Polyethylen niedriger Dichte (LLDPE) umfasst.

5. Folie nach einem der vorstehenden Ansprüche, wobei jede der ersten Außenschicht und der zweiten Außenschicht jeweils getrennt ein lineares Polyethylen niedriger Dichte (LLDPE) umfassen.

6. Folie nach einem der vorstehenden Ansprüche, wobei der Kern ferner eine zweite Kernschicht und eine dritte Kernschicht umfasst, wobei die zweite Kernschicht zwischen der ersten Außenschicht und der ersten Kernschicht angeordnet ist und die dritte Kernschicht zwischen der ersten Kernschicht und der zweiten Außenschicht angeordnet ist.

7. Folie nach Anspruch 6, wobei jede der zweiten Kernschicht und der dritten Kernschicht jeweils getrennt ein lineares Polyethylen niedriger Dichte (LLDPE) umfassen.

8. Folie nach einem der vorstehenden Ansprüche, wobei die Folie eine in Maschinenrichtung orientierte Folie ist.

9. Folie nach einem der vorstehenden Ansprüche, wobei die Folie eine Streckhaubenfolie ist.

**Revendications**

1. Film multicouche comprenant :

   une première couche externe, une seconde couche externe, et un noyau, le noyau comprenant une ou plusieurs couches de noyau ; dans lequel le noyau est positionné entre la première couche externe et la seconde couche externe ; dans lequel le noyau comprend 100 % en poids de polymères à base d'éthylène, sur la base du poids total de polymères du noyau ; et dans lequel une première couche de noyau comprend un copolymère éthylène-propylène comprenant 60 à 95 % en poids de monomère éthylène et 5 à 40 % en poids de comonomère propylène, le copolymère éthylène-propylène ayant les caractéristiques suivantes :
   une masse volumique comprise dans la plage allant de 0,865 à 0,920 g/cm$^3$, mesurée conformément à la norme ASTM D792 ;
   un indice de fluidité ($I_2$) d'au moins 0,5 g/10 min, mesuré conformément à la norme ASTM D-1238 à 190 °C à 2,16 kg ; et
   une distribution des masses moléculaires, Mw/Mn, allant de 3,0 à 5,0, mesurée comme décrit dans la description.

2. Film selon la revendication 1, dans lequel le copolymère éthylène-propylène est en outre **caractérisé en ce qu'il** a un seul pic dans un profil d'élution de distribution améliorée de la composition des comonomères (ICCD) entre une plage de température allant de 40 à 100 °C, mesuré comme décrit dans la description.

3. Film selon l'une quelconque revendication précédente, dans lequel le copolymère éthylène-propylène est en outre **caractérisé en ce qu'**il a un rapport d'écoulement à l'état fondu, $I_{10}/I_2$, allant de 5 à 20, dans lequel l'indice de fluidité ($I_2$) est mesuré conformément à la norme ASTM D-1238 à 190 °C à 2,16 kg et l'indice de fluidité ($I_{10}$) est mesuré conformément à la norme ASTM D-1238 à 190 °C à 10 kg.

4. Film selon l'une quelconque revendication précédente, dans lequel la première couche de noyau comprend en outre un polyéthylène linéaire basse densité (LLDPE).

5. Film selon l'une quelconque revendication précédente, dans lequel chacune de la première couche externe et de la seconde couche externe, séparément, comprend un polyéthylène linéaire basse densité (LLDPE).

6. Film selon l'une quelconque revendication précédente, dans lequel le noyau comprend en outre une deuxième couche de noyau et une troisième couche de noyau, dans lequel la deuxième couche de noyau est positionnée entre la première couche externe et la première couche de noyau et la troisième couche de noyau est positionnée entre la première couche de noyau et la seconde couche externe.

7. Film selon la revendication 6, dans lequel chacune de la deuxième couche de noyau et de la troisième couche de noyau, séparément, comprend un polyéthylène linéaire basse densité (LLDPE).

8. Film selon l'une quelconque revendication précédente, dans lequel le film est un film orienté dans le sens machine.

9. Film selon l'une quelconque revendication précédente, dans lequel le film est un film de housse étirable.

FIG. 1 – ICCD Profile of Poly. 2

ICCD Elution Profile of Poly. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2021026139 A
- JP H06115027 B
- WO 2020219378 A
- WO 2009110887 A
- US 4599392 A
- US 5272236 A
- US 5278272 A
- US 5582923 A
- US 5733155 A
- US 3645992 A
- US 4076698 A
- US 3914342 A
- US 5854045 A
- WO 2017040127 A1, Cong and Parrott
- US 9688795 B, Cerk and Cong
- EP 3390056 B1

### Non-patent literature cited in the description

- **WILLIAMS** ; **WARD**. *J. Polym. Sci., Polym. Letters*, 1968, vol. 6, 621
- *Polymer*, 1989, vol. 30, 1350